# EUROPÄISCHE PATENTSCHRIFT

(11) **EP 0 631 659 B1**
(45) Veröffentlichungstag und Bekanntmachung des Hinweises auf die Patenterteilung: **10.04.1996**
(21) Anmeldenummer: 93905342.7
(22) Anmeldetag: 11.03.1993
(51) Int. Cl.: F41H 5/013, F16B 5/06, B62D 27/06

(54) **GEHÄUSE ZUM BALLISTISCHEN SCHUTZ VON PERSONEN UND/ODER OBJEKTEN**
CAGE FOR THE BALLISTIC PROTECTION OF PERSONS OR OBJECTS
BOITIER DE PROTECTION BALISTIQUE DE PERSONNES ET/OU D'OBJETS

(30) Priorität: 16.03.1992 DE 4208308
(43) Veröffentlichungstag der Anmeldung: 04.01.1995
(73) Patentinhaber: FRIED. KRUPP AG HOESCH-KRUPP, D-44145 Dortmund (DE); Akzo Nobel Faser AG, D-42103 Wuppertal (DE)
(72) Erfinder: DIETERICH, Günter, D-44289 Dortmund (DE); PIEL, Karlheinz, D-58239 Schwerte (DE); REINEHR, Paul-Werner, D-58640 Iserlohn (DE); SCHULTE, Hans-Werner, D-58239 Schwerte (DE); FELS, Achim, D-42109 Wuppertal (DE); MOHR, Michael, D-42113 Wuppertal (DE)
(74) Vertreter: Fett, Günter
(86) Internationale Anmeldenummer: EP9300560
(87) Internationale Veröffentlichungsnummer: WO9319342

(56) Entgegenhaltungen:
- DE-A- 1 901 502
- DE-A- 2 816 579
- DE-A- 3 635 741
- DE-C- 2 821 117
- FR-A- 2 298 023
- GB-A- 503 935
- GB-A- 2 081 331
- GB-A- 2 227 450
- US-A- 2 312 489
- US-A- 3 190 408
- US-A- 4 351 558
- US-A- 5 006 390

## Beschreibung

Gegenstand der vorliegenden Erfindung ist ein Gehäuse zum ballistischen Schutz von Personen und/oder Objekten.

Ein derartiges Gehäuse für Fahrzeuge, beispielsweise Panzer, ist in DE-OS 19 01 502 beschrieben. Das beschriebene Gehäuse besteht aus Platten und Profilschienen, wobei die Profilschienen stufenförmig angeordnete Schultern zur Aufnahme der Platten besitzen. Die Verbindung der Platten mit den Profilschienen erfolgt durch Schweißen oder über nicht näher beschriebene lösbare Elemente. Derartige Gehäuse dienen zum Schutz vor Projektilen bei direktem Beschuß oder zum Schutz vor Splittern und Druckwellen bei Explosionen, wie sie beispielsweise bei der Explosion von Bomben auftreten. Sie eignen sich zur Ausstattung von Panzern, Geldtransportern, Schiffen und auch Containern. Nachteilig bei den bekannten Gehäusen ist, daß im Falle eines bestimmungsgemäßen Belastungsfalls die Platten derart aus ihrer Verankerung gerissen werden, daß sowohl Platten als auch Profilschienen in der Umgebung des Auftreffbereiches von Objekten Splittern oder Druckwellen zerstört sind. Nach dem Ernstfall müssen also regelmäßig große Bereiche, häufig das gesamte Gehäuse neu gebaut werden.

Aus US-A-4,351,558 (siehe den Oberbefriff des Anspruchs 1) ist ein Gehäuse für Lastkraftwagen (Trucks) bekannt, bei dem Platten in Rinnen von Profilen eingesetzt werden. Die Platten werden dann mit den Profilen über Nieten verbunden. Verwendet man eine derartige Konstruktion für den ballistischen Schutz, so stellt man fest, daß nach Einwirkung eines Geschosses nicht nur die Platten sondern auch die Profile verbogen sind, sodaß - wie bereits oben erwähnt - große Bereiche, häufig sogar das ganze Gehäuse erneuert werden muß. Für einen wirtschaftlichen Einsatz als Gehäuse zum ballistischen Schutz sind auch diese Lastkraftwagengehäuse nicht geeignet.

Aufgabe der vorliegenden Erfindung ist es, ein Gehäuse mit Platten als Gehäusewandungen und Profilschienen, bei dem die Profilschienen zumindest eine jeweils eine Plattentkante umfassende Rinne aufweisen, zur Verfügung zu stellen, welches auch nach Einwirkung von Projektilen, Splittern oder Druckwellen mit einem entsprechend geringen Aufwand, bevorzugt lediglich durch Austausch der Platten, instandgesetzt werden kann.

Diese Aufgabe wird erfindungsgemäß dadurch gelöst, daß zum ballistischen Schutz von Personen und/oder Objekten die Platten Verbundplatten sind und zumindest in dem Bereich, der der Aufnahme in die Profilschienen dient, kompressibel sind, daß die Rinne(n) zur Außenseite des Gehäuses hin eine glatte Wandung und zur Innenseite des Gehäuses eine wellenförmig profilierte oder sägezahnartig profilierte Wandung aufweist (aufweisen), und daß die Platten mit Hilfe von Keilen unter Komprimierung des Kantenbereichs in die Rinne(n) der Profilschienen eingesetzt sind, wobei die Keile zumindest auf der der Rinnenwandung zugewandten Seite eine der Rinnenwandung entsprechende Profilierung aufweisen.

Aus US-A-3 190 408 ist zwar bekannt, Keile als Verbindungselemente bei in Rinnen von Profilen eingesetzten Platten Keile einzusetzen. Doch ist auch dort schon aufgrund der Verwendungszwecke (Lastkraftwagen, Boote oder Schiffskontainer) lediglich von Bedeutting, eine einfache Bauweise zur Verfügung zu stellen. Diese Bauweise eignet sich ebenfalls schlecht für den ballistschen Schutz, da die verwendeten Materialien wiederum erkennen lassen, daß bei einer ballistischen Einwirkung große Bereiche inklusive der eingesetzten Profile ausgetauscht werden müssen.

Bei Einwirkung von Projektilen, Splittern oder Druckwellen auf ein Gehäuse wird in der Regel zumindest eine Platte derart beansprucht, daß diese verformt wird. Bei der Verwendung des erfindungsgemäßen Gehäuses wird die Platte bei derartigen Einwirkungen sicher in der Umklammerung der Profilschienen gehalten. Nur bei extremer Beanspruchung wird die Platte teilweise aus der Umklammerung der Profilschienen gerissen, wobei durch die vorherige Komprimierung des Kantenbereiches der Platte genügend Widerstand vorhanden ist, um ein vollständiges Herauslösen der Platte aus ihrer Umklammerung zu verhindern. Ein wirksamer Schutz für die im gehäuse befindlichen Personen und/oder Objekte ist somit gewährleistet. Nach Einwirkung von Projektilen, Splittern oder Druckwellen lassen sich die verformten Platten zwar unter Zerstörung der Platten (diese sind nach derartigen Einwirkungen in der Regel nicht mehr brauchbar), jedoch unter Erhalt der Profilschienen entfernen. Neue Platten lassen sich ohne großen Aufwand in die erhalten gebliebenen Profilschienen einsetzen.

Zur mechanischen Sicherung der Plattenkantenbereiche sind die Keile profiliert, wobei die Profilierung der Keile der Profilierung der Rinnenwandung zur Gehäuseinnenseite hin entspricht. Besonders gute Ergebnisse werden mit Keilen erzielt, bei denen diese beidseitig wellenförmige oder sägezahnartige Profilierungen vorgesehen sind. Als Keiloberfläche hat sich ein Wellenprofil bestens bewährt. Für Extremfälle können auch sägezahnartige Profile eingesetzt werden. Über die Rinnentiefe, die Keillänge und den Keilwinkel läßt sich das Maß der Komprimierung und somit die Festigkeit der Verbindung der Platte mit den Profilschienen bestimmen. Zur Herstellung der Keilverbindung hat sich ein Winkel für die Keile zwischen 5° und 15° bestens bewährt.

Die Rinnen der Profilschiene weisen günstig ein V-förmiges, bevorzugt ein U-förmiges Profil auf. Dieses Rinnenprofil läßt sich erfindungsgemäß auch dadurch erreichen, daß die Profilschiene an sich eine L-förmige Nut aufweist, mit deren kurzem Schenkel eine Auflage verbunden ist. Profilschienen und/oder Keile bestehen günstigerweise aus einem harten, druck- und kriechfesten Material. Stahl, Keramik und mit Metall beschichtete Keramik haben sich für die Profilschienen, die Keile und die Auflagen bestens bewährt.

Aufgrund der erfindungsgemäß angewandten Verbindungstechnik wird es ohne weiteres möglich, als Platten Verbundplatten einzusetzen. Verbundplatten sind bekanntlich aus mehreren Schichten zusammengesetzte Platten, deren Widerstand gegen Impakt aufgrund von Projektilbeschuß, Splitter- oder Druckwellenbelastung bekannt ist. Insbesondere haben sich hierbei Platten aus Faserverbundwerkstoff bewährt. Zur Herstellung der Platten aus Faserbundwerkstoff eignen sich Fasern aus Aramid, Kohlenstoff, Glas und/oder Polyäthylen, die in eine komprimierbare Matrix eingebettet werden. Als Matrix eignen sich beispielsweise Thermoplaste, wobei Polycarbonat besonders günstig ist, oder Duromere, von denen Phenolharz, insbesondere mit 5 bis 60%iger Polyvinylbutyral-Beimischung ebenfalls günstige Ergebnisse erbringt. Bestimmte Elastomere, beispielsweise spezielle Kautschuke, können ebenfalls als Matrix für die Platten des erfindungsgemäßen Gehäuses eingesetzt werden.

Bevorzugt liegt die Kompressibilität der Platten zumindest im Bereich der Plattenkante zwischen 0,5 und 5%.

Bei Anwendung einer Auflage, die in der Regel aus Stahl, Keramik oder mit Metall beschichteter Keramik besteht, und Platten aus verbundwerkstoff werden die bekannt guten ballistischen Eigenschaften der Verbundplatten durch die ebenfalls als Verbund wirkenden Auflagen günstig beeinflußt.

Die Erfindung wird anhand der nachfolgenden Figuren näher erläutert.

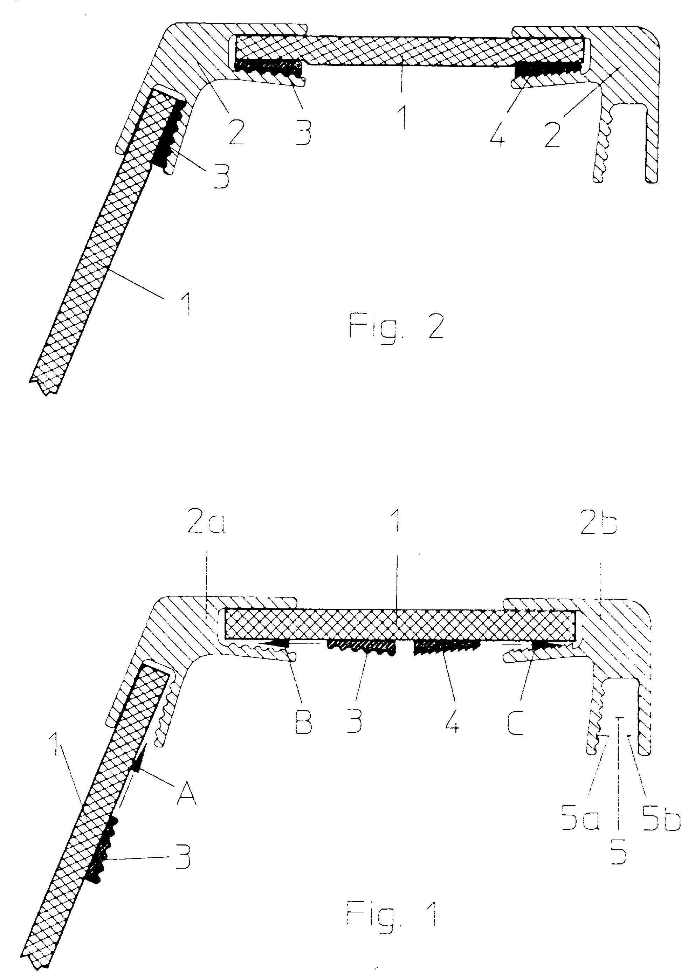

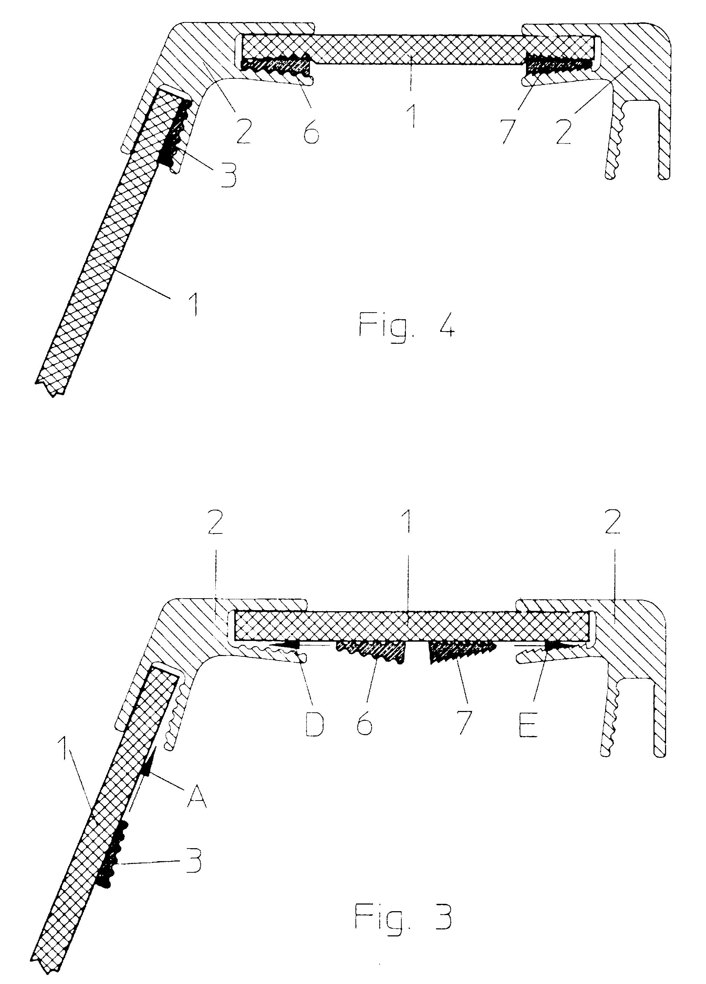

In den Figuren 1 bis 6 sind jeweils verschiedene Verbindungstechniken zur Herstellung des erfindungsgemäßen Gehäuses schematisch im Querschnitt dargestellt. Es versteht sich von selbst, daß bei Ausführung des erfindungsgemäßen Gehäuses in der Regel nur eine der dargestellten Verbindungstechniken Verwendung findet. Lediglich der Übersichtlichkeit halber wurden in den Figuren jeweils verschiedene Verbindungstechniken dargestellt. Die Figuren 1, 3 und 5 zeigen diese Verbindungstechniken jeweils vor der Herstellung der Verbindung, während die Figuren 2, 4 und 6 die fertige Verbindung von Platte mit Profilschiene darstellen.

In den Figuren 1 und 2 sind die Platten mit 1 und die Profilschienen mit 2 bezeichnet. Die Profilschienen 2a und 2b weisen jeweils eine Rinne 5 auf, bei der die innenliegende Rinnenwandung als Wellenprofil 5a und die nach außen liegende Innenwandung 5b glatt ausgebildet ist. Die Profilschiene 2b weist zusätzlich eine Rinne auf, deren Innenwandung in Richtung des Pfeiles C eine sägezahnartig profilierte Wandung aufweist. Keile mit entsprechend profilierten Oberflächen - Keil 3 mit wellenförmiger einseitiger Profilierung; Keil 4 mit sägezahnartiger einseitiger Profilierung - sind in Figur 1 in gelöstem Zustand dargestellt und werden zur Herstellung der Verbindung gemäß Figur 2 in Richtung der Pfeile A, B bzw. C in dem zwischen Rinnenwandung und Plattenkantenebene vorhandenen Hohlraum eingetrieben. Hierbei wird der Plattenkantenbereich komprimiert.

In den Fällen, in denen die in den Figuren 1 und 2 dargestellte Verbindungstechnik keine genügend hohe Verbindungsfestigkeit ergibt, kann - wie in den Figuren 3 und 4 gezeigt - ein Keil mit doppelseitiger Profilierung Verwendung finden. Hierbei weist Keil 6, der in Richtung Pfeil D eingetrieben wird, eine beidseitige wellenförmige Profilierung auf, während Keil 7, der in Richtung Pfeil E eingetrieben wird, eine beidseitige sägezahnartige Profilierung aufweist.

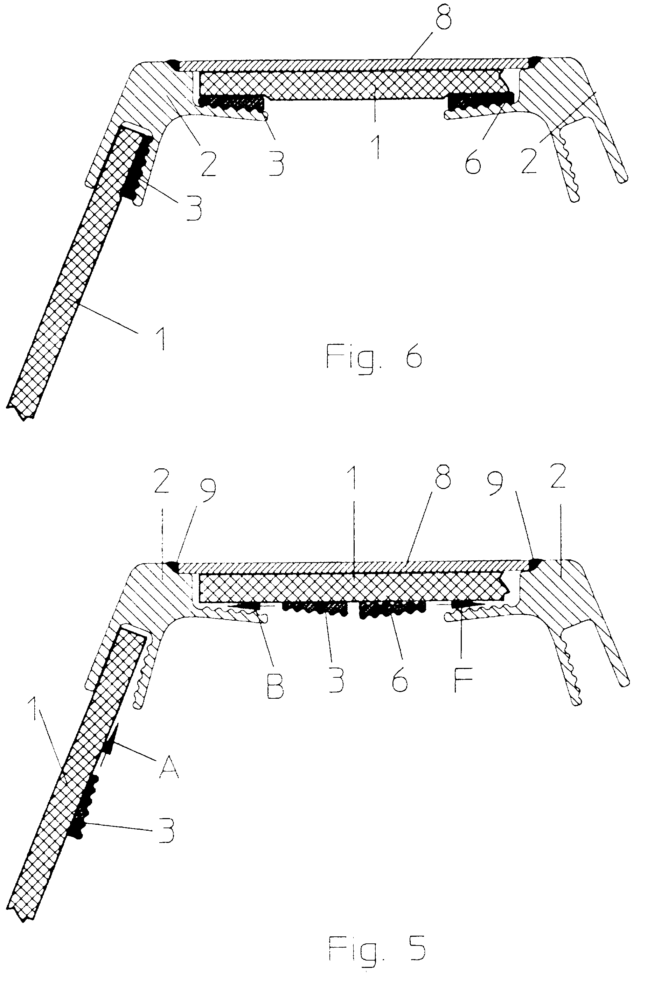

Gemäß der Figuren 5 und 6 wird die Rinne der Profilschienen 2 durch eine Nut gebildet, deren kurzer Schenkel mit einer Auflage 8 über die Schweißnaht 9 verbunden ist. Die Komprimierung der Plattenkantenbereiche erfolgt wie in den vorhergehenden Figuren über Keile, so daß deren Beschreibung bei den Figuren 5 und 6 unterbleiben kann.

Zur besseren Lösbarkeit der Keile aus dem Verbund können die die Rinne bildenden Schenkel der Profilschienen 2 abschnittweise ausgeklinkt sind, so daß durch Vorwärtstreiben der Keile in Längsrichtung der Profilschienen bis zur Ausklinkung diese an der Ausklinkung entfernt werden können. Auf diese Weise kann die Verbindung zwischen Platte und Profilschiene einfach gelöst werden. Bei der Anwendung von Platten aus Faserverbundwerkstoff genügt es jedoch in der Regel, wenn die Platten zum Austausch mechanisch zerstört und danach die übrigbleibenden Plattenkantenbereiche stückweise aus der Hülle herausgeschlagen werden, wonach die Keile entfernt werden können.

## Patentansprüche

1. Gehäuse zum ballistischen Schutz von Personen und/oder Objekten mit Platten (1) als Gehäusewandungen, die über Profilschienen (2) miteinander verbunden sind, wobei die Profilschienen (2) zumindest eine jeweils eine Plattenkante umfassende Rinne (5) aufweisen, in die diese Platte eingesetzt ist, dadurch gekennzeichnet, daß die Platten Verbundplatten sind und zumindest in dem Bereich, der der Aufnahme in die Profilschienen (2) dient, kompressibel sind, daß die Rinne(n) (5) zur Außenseite des Gehäuses hin eine glatte Wandung (5b) und zur Innenseite des Gehäuses eine wellenförmig profilierte oder sägezahnartig profilierte Wandung (5a) aufweist (aufweisen), und daß die Platten mit Hilfe von Keilen (3, 4, 6, 7) unter Komprimierung des Kantenbereichs in die Rinne(n) (5) der Profilschienen (2) eingesetzt sind, wobei die Keile (3, 4, 6, 7) zumindest auf der der Rinnenwandung zugewandten Seite eine der Rinnenwandung entsprechende Profilierung aufweisen und diese Keile (3, 4, 6, 7) in dem zwischen innenliegender Rinnenwandung (5a) und innenliegender Plattenkante vorhandenen Hohlraum eingetrieben sind.

2. Gehäuse nach Anspruch 1, dadurch gekennzeichnet, daß die Platten aus Faserverbundwerkstoff bestehen.

3. Gehäuse nach Anspruch 1 oder 2, dadurch gekennzeichnet, daß die Keile (3, 4, 6, 7) beidseitig wellenförmig oder sägezahnartig profiliert sind.

4. Gehäuse nach einem oder mehreren der Ansprüche 1 bis 3, dadurch gekennzeichnet, daß die Keile einen Winkel zwischen 5° und 15° aufweisen.

5. Gehäuse nach einem oder mehreren der Ansprüche 1 bis 4, dadurch gekennzeichnet, daß die Profilschiene (2) zumindest eine U-förmige Rinne aufweist.

6. Gehäuse nach einem oder mehreren der Ansprüche 1 bis 4, dadurch gekennzeichnet, daß die Profilschiene (2) zumindest eine V-förmige Rinne aufweist.

7. Gehäuse nach einem oder mehreren der Ansprüche 1 bis 4, dadurch gekennzeichnet, daß die Profilschiene (2) zumindest eine L-förmige Nut aufweist, mit derem kurzen Schenkel eine Auflage (8) verbunden ist, wobei die Auflage mit der L-förmigen Nut zusammen die den kompressiblen Teil der Platte umfassende Rinne bildet.

8. Gehäuse nach einem oder mehreren der Ansprüche 1 bis 7, dadurch gekennzeichnet, daß die Profilschienen (2) und/oder Keile (3, 4, 6, 7) und/oder Auflage (8) aus einem harten, druck- und kriechfesten Material bestehen.

9. Gehäuse nach einem oder mehreren der Ansprüche 1 bis 8, dadurch gekennzeichnet, daß die Profilschienen (2) und/oder Keile (3, 4, 6, 7) und/oder Auflage (8) zumindest überwiegend aus Stahl bestehen.

10. Gehäuse nach einem oder mehreren der Ansprüche 1 bis 8, dadurch gekennzeichnet, daß die Profilschienen (2) und/oder Keile (3, 4, 6, 7) und/oder Auflage (8) zumindest überwiegend aus mit Metall beschichteter Keramik bestehen.

11. Gehäuse nach einem oder mehreren der Ansprüche 1 bis 8, dadurch gekennzeichnet, daß die Keile (3, 4, 6, 7) zumindest überwiegend aus Keramik bestehen.

12. Gehäuse nach einem oder mehreren der Ansprüche 1 bis 11, dadurch gekennzeichnet, daß die Kompressibilität der Platten (1) zumindest im Bereich der Plattenkante zwischen 0,5 und 5% liegt.

## Claims

1. Housing for the ballistic protection of persons and/or articles, having plates (1) as housing walls which are connected to one another by section rails (2), the section rails (2) having at least one channel (5) which encloses in each case one plate edge and into which said plate is inserted, characterized in that the plates are compound plates and are compressible at least in the region used for insertion into the section rails (2), that the channel(s) (5) towards the outside of the housing has (have) a smooth wall (5b) and towards the inside of the housing has (have) a wall (5a) with an undulating or serrated contour, and that the plates are inserted with simultaneous compression of the edge region with the aid of wedges (3, 4, 6, 7) into the channel(s) (5) of the section rails (2), the wedges (3, 4, 6, 7) at least at the side facing the channel wall having a contour corresponding to the channel wall and said wedges (3, 4, 6, 7) being driven home in the space between the inner-lying channel wall (5a) and the inner-lying plate edge.

2. Housing according to claim 1, characterized in that the plates are made of a fibre composite material.

3. Housing according to claim 1 or 2, characterized in that the wedges (3, 4, 6, 7) have an undulating or serrated contour on both sides.

4. Housing according to one or more of claims 1 to 3, characterized in that the wedges have an angle of between 5° and 15°.

5. Housing according to one or more of claims 1 to 4, characterized in that the section rail (2) has at least one U-shaped channel.

6. Housing according to one or more of claims 1 to 4, characterized in that the section rail (2) has at least one V-shaped channel.

7. Housing according to one or more of claims 1 to 4, characterized in that the section rail (2) has at least one L-shaped groove, to the shorter limb of which a support (8) is connected, the support together with the L-shaped groove forming the channel which encloses the compressible part of the plate.

8. Housing according to one or more of claims 1 to 7, characterized in that the section rails (2) and/or wedges (3, 4, 6, 7) and/or support (8) are made of a hard, pressure- and creep-resistant material.

9. Housing according to one or more of claims 1 to 8, characterized in that the section rails (2) and/or wedges (3, 4, 6, 7) and/or support (8) are made at least predominantly of steel.

10. Housing according to one or more of claims 1 to 8, characterized in that the section rails (2) and/or wedges (3, 4, 6, 7) and/or support (8) are made at least predominantly of a metal-coated ceramic material.

11. Housing according to one or more of claims 1 to 8, characterized in that the wedges (3, 4, 6, 7) are made at least predominantly of a ceramic material.

12. Housing according to one or more of claims 1 to 11, characterized in that the compressibility of the plates (1), at least in the region of the plate edge, is between 0.5 and 5%.

## Revendications

1. Structure pour la protection balistique de personnes et/ou d'objets, comportant comme parois de structure, des panneaux (1) qui sont liés entre eux par des profilés (2), les profilés (2) présentant au moins une rainure (5) qui reçoit chaque fois un bord de panneau et dans laquelle le panneau est engagé, caractérisée par le fait que les panneaux sont des panneaux composites et sont compressibles au moins dans la zone servant au montage dans les profilés (2), par le fait la (les) rainure(s) (5) présente(nt) en direction de l'extérieur de la tructure une paroi (5b) lisse et en direction de l'intérieur de la structure une paroi (5a) profilée en forme d'ondes ou en forme de dents de scie et par le fait que les panneaux sont montés dans la (les) rainure(s) au moyen de cales (3, 4, 6, 7) en comprimant la zone de _{b}ord, les cales (3, 4, 6, 7) présentant, au moins la face tournée vers la paroi de la rainure, une forme profilée adaptée à la paroi de la rainure et les cales (3, 4, 6, 7) étant enfilées dans l'espace entre la paroi de rainure (5a) située côté intérieur et le bord du panneau situé côté intérieur.

2. Structure selon la revendication 1, caractérisée par le fait que les panneaux sont en matériau composite renforcé par fibres.

3. Structure selon la revendication 1 ou 2, caractérisée par le fait que les cales (3, 4, 6, 7) présentent sur leurs deux faces un profil en forme d'ondes ou de dents de scie.

4. Structure selon une ou plusieurs des revendications 1 à 3, caractérisée par le fait que les cales (3, 4, 6, 7) présentent un angle compris entre 5° et 15°.

5. Structure selon une ou plusieurs des revendications 1 à 4, caractérisée par le fait que le profilé (2) présente au moins une rainure en U.

6. Structure selon une ou plusieurs des revendications 1 à 4, caractérisée par le fait que le profilé (2) présente au moins une rainure en V.

7. Structure selon une ou plusieurs des revendications 1 à 4, caractérisée par le fait que le profilé (2) présente au moins une rainure en L à l'aile courte de laquelle est liée une plaque d'appui (8), la plaque d'appui (8) et la rainure en L formant ensemble la rainure qui reçoit la partie compressible du panneau.

8. Structure selon une ou plusicurs des revendications 1 à 7, caractérisée par le fait que les profilés (2) et/ou les cales (3, 4, 6, 7) et/ou la plaque d'appui (8) sont constitués d'un matériau dur, résistant à la pression et au fluage.

9. Structure selon une ou plusicurs des revendications 1 à 8, caractérisée par le fait que les profilés (2) et/ou les cales (3, 4, 6, 7) et/ou la plaque d'appui (8) sont constitués au moins en majorité d'acier.

10. Structurc selon une ou plusicurs des revendications 1 à 8, caractérisée par le fait que les profilés (2) et/ou les cales (3, 4, 6, 7) et/ou la plaque d'appui (8) sont constitués au moins en majorité de céramique revêtue de métal.

11. Structure selon une ou plusieurs des revendications 1 à 8, caractérisée par le fait que les cales (3, 4, 6, 7) sont constituées au moins en majorité de céramique.

12. Structure selon une ou plusieurs des revendications 1 à 11, caractérisée par le fait que la compressibilité des panneaux (1), au moins dans la région du bord de panneau, est comprise entre 0,5 et 5 %.
